# EUROPÄISCHE PATENTSCHRIFT

(11) **EP 1 963 216 B1**
(45) Veröffentlichungstag und Bekanntmachung des Hinweises auf die Patenterteilung: **16.09.2009**
(21) Anmeldenummer: 06805457.6
(22) Anmeldetag: 20.10.2006
(51) Int. Cl.: B65G 59/08

(54) **DEPALETTIERER**
DEPALLETIZER
DECHARGEUSE DE PALETTES

(30) Priorität: 22.12.2005 DE 102005061442
(43) Veröffentlichungstag der Anmeldung: 03.09.2008
(73) Patentinhaber: Schulz, Jürgen, 24145 Kiel (DE)
(72) Erfinder: Schulz, Jürgen, 24145 Kiel (DE)
(74) Vertreter: Biehl, Christian
(86) Internationale Anmeldenummer: PCT/DE2006/001858
(87) Internationale Veröffentlichungsnummer: WO 2007/071219

(56) Entgegenhaltungen:
- EP-A1- 1 389 597
- US-A- 3 946 880
- US-A- 4 037 734

## Beschreibung

Die Erfindung betrifft einen Depalettierer zum lagenweisen Entstapeln eines von einer Transportpalette getragenen Warenstapels, der mit einer Stapelaufnahme, einer Lagenaufnahme und einer Schiebeeinheit versehen ist, wobei die zur Aufnahme des Warenstapels dienende, mit einer diesen tragenden Stapeltragplatte versehene Stapelaufnahme um eine erste Achse zwischen einer ersten Position, in der die Ebene der Lagen horizontal ausgerichtet ist und einer zweiten Position, in der die Ebenen der Lagen jedenfalls im Wesentlichen vertikal ausgerichtet sind kippbar ist, und die zur Aufnahme der jeweiligen freien Lage des Warenstapels dienende Lagenaufnahme mit einer Lagentragplatte und einer sich rechtwinklig zu der Stapeltragplatte erstreckenden Lagestützplatte versehen ist und zum Kippen um eine zweite Achse in eine Position, in der die aufgenommene Lage wieder horizontal ausgebildet ist.

Ein derartiger Depalettierer ist aus der EP 1 389 597 B1 bekannt.

Bei dieser bekannten Ausbildung eines Depalettierers wird der Warenstapel auf der in der zweiten Position jedenfalls im wesentlichen horizontal verlaufenden Stapeltragplatte so verschoben, dass die jeweils zu entstapelnde Lage des Warenstapels auf einen Übergabetisch geschoben wird. Mittel zum Halten oder Führen der vertikal verlaufenden Seiten des Warenstapels sind nicht vorgesehen. Diese vorbekannte Ausbildung eines Depalettierers hat den Nachteil, dass sie bei problematischen Warenstapeln nicht zuverlässig arbeitet, das Abfallen von Waren aus dem Stapel wir nicht verhindert, das Verschieben des Warenstapels auf der Stapeltragplatte bedarf aufgrund der Reibung zwischen Warenstapel und Stapeltragplatte einer hohen Kraft, die Ware kann beschädigt werden.

Der Erfindung liegt daher die Aufgabe zu Grunde, einen Depalettierer der eingangs genannten Art zu schaffen, bei dem der Warenstapel in der zweiten Position geeignet gelagert ist und ein Verschieben des Warenstapels auf der Tragplatte nicht erfolgt.

Erfindungsgemäß wird diese Aufgabe dadurch gelöst, dass die Stapelaufnahme eine sich rechtwinklig zu der Stapeltragplatte erstreckende Stapelstützplatte aufweist, wobei die Stapeltragplatte bzw. die Stapelstützplatte in der zweiten Position der Stapelaufnahme zur Horizontalen in einem Winkel von weniger als 45° bzw. von weniger als 135° verlaufen, die Lagenstützplatte sich rechtwinklig zu der Stapelstützplatte erstreckt, die Schiebeeinheit zum Abschieben der jeweiligen freien Lage des Warenstapels von der Stapeltragplatte auf die Lagentragplatte eingerichtet ist, und die Stapeltragplatte oder die Stapelstützplatte derart relativ zueinander verschieblich ausgebildet sind, dass die jeweilige freie Lage mit der Lagenaufnahme fluchtend ausgerichtet werden und von der Schiebeeinheit von der Stapeltragplatte auf die Lagentragplatte verschoben werden kann.

Bei einem ersten bevorzugten Ausführungsbeispiel sind die Stapelstützplatte, die Lagenaufnahme und die Schiebeeinheit relativ zu der den zu entstapelnden Warenstapel tragenden, ortsfest verbleibenden Stapeltragplatte verschieblich ausgebildet. Bei einem alternativen Ausführungsbeispiel ist die den zu entstapelnden Warenstapel tragende Stapeltragplatte relativ zu der Stapelstützplatte, der Lagenaufnahme und er Schiebeeinheit verschieblich ausgebildet.

Die Schiebeeinheit kann mit einer auf die der Lagenaufnahme abgewandten Seitenfläche der Lage angreifenden Schiebeplatte und einer sich bei Beginn des Abschiebens in der Ebene der Stapelstützplatte erstreckenden Lagenstütze versehen sein.

Die erste und/oder die zweite Achse können zu der Horizontalen geneigt verlaufen, die Stapeltragplatte kann mit Mitteln zum Ergreifen der den Warenstapel tragenden Palette versehen sein.

Bei einem besonders bevorzugten Ausführungsbeispiel ist die Stapelstützplatte mit einem umlaufenden Stütz- oder freilaufenden Transportband versehen, wodurch bei einem Verschieben der Stapeltragplatte oder aber der Stapelstützplatte zueinander eine Reibung zwischen dem Warenstapel und der Stapelstützplatte vermieden wird.

Die Erfindung wird im Folgenden anhand einer Zeichnung erläutert. Dabei zeigt:
- Fig. 1: eine Seitenansicht des Depalettierers in der Ausgangsstellung bei vertikal ausgerichteter Stapelaufnahme,
- Fig.2: eine Seitenansicht des Depalettierers nach Kippen der Stapelaufnahme,
- Fig.3: eine Seitenansicht des Depalettierers nach Verfahren der Stapelstützplatte mit Lagenaufnahme und Schiebeeinheit (oder Verfahren der Tragplatte),
- Fig. 4: eine Seitenansicht des Depalettierers nach Abschieben der freien Lage,
- Fig. 5: eine Seitenansicht des Depalettierers nach Verschwenken der Lagenaufnahme,
- Fig. 6: eine Draufsicht (leicht schräg) auf den Depalettierer nach Kippen der Stapelaufnahme,
- Fig. 7: eine (leicht schräge) Draufsicht auf den Depalettierer nach Verschieben der lagenstützplatte mit Lagenaufnahme und Schiebeeinheit (oder Verschieben der Tragplatte mit dem Warenstapel),
- Fig. 8: eine (leicht schräge) Draufsicht nach Abschieben der freien Lage, und
- Fig. 9: eine Draufsicht auf den Depalettierer bei verschwenkter Lagenaufnahme.

Der Depalettierer besteht aus einer Stapelaufnahme 12, einer Lagenaufnahme 14 und einer Schiebeeinheit 16.

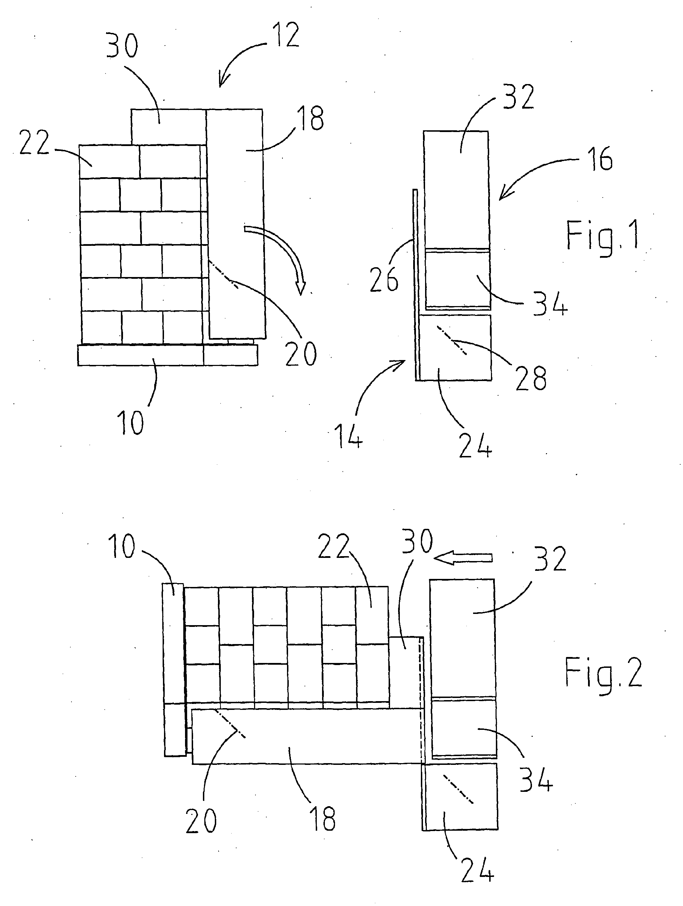

In der in Fig. 1 dargestellten Ausgangsposition, ist der aus einer Mehrzahl von jeweils horizontal aufeinander liegenden Lagen 22 gebildete, auf einer Transportpalette 10 ruhende zu entstapelnde Warenstapel in die Stapelaufnahme 12, die aus einer Stapeltragplatte 18 und einer Stapelstützplatte 30 besteht, (beispielweise mit einem Gabelstapler) hineingeführt.

Mit Abstand von der Stapelaufnahme 12 ist eine Lagenaufnahme 14 mit Lagentragplatte 24 und Lagenstützplatte 26 und eine Schiebeeinheit 16 mit Schiebeplatte 32 und Lagenstütze 34 angeordnet.

In der in Fig. 2 dargestellten Position ist die Sfapelaufnahme um 90° in eine vertikale Position gekippt (bei der tatsächlichen Ausführung wird der Winkel etwas geringer als 90° sein), wobei die Kippung um die lediglich angedeutete erste, nicht horizontal verlaufende erste Achse 20 erfolgt. Durch die Verkippung um diese in der Fig. 1 mit ca. 40-50° schräg verlaufende Achse werden die horizontalen Lagen in vertikale Lage gebracht. Das obere Ende der Stapeltragplatte 18 liegt in dieser Position an der Lagenstützplatte 26 an, die sich - in dieser Position - rechtwinklig zu der Stapelstützplatte 30 erstreckt.

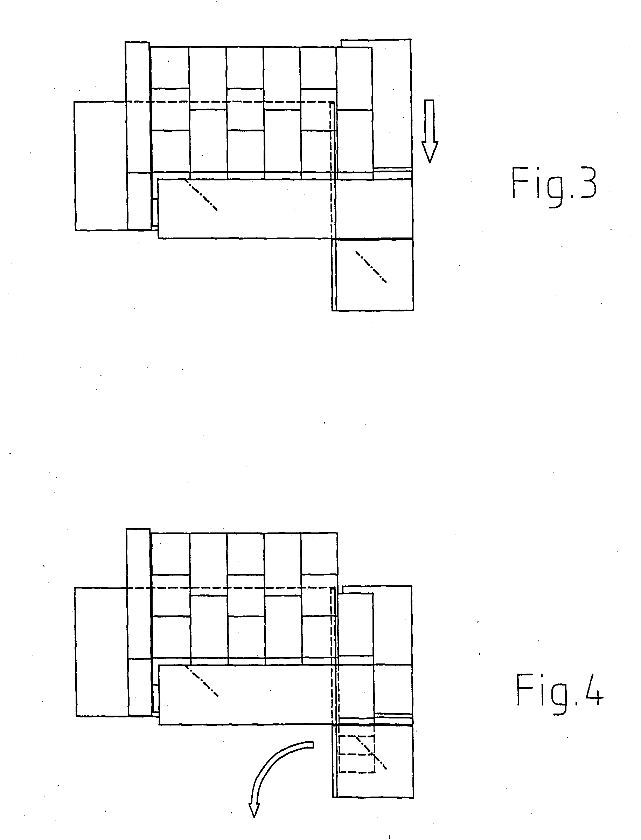

In Fig. 3 ist sind die Stapelstützplatte 18, die Lagenaufnahme 14 und die Schiebeeinheit 16 nach links derart verfahren, dass die freie Lage 22, also die Lage, die in Ausgangsposition am weitesten oben lag, jenseits der Lagenstützplatte 26 liegt (bei der alternativen Ausfiihrungsform ist die Stapeltragplatte 18 in Richtung auf die Lagenaufnahme 14 und die Schiebeeinheit 16 verschoben).

In Fig. 4 ist gezeigt, wie die Schiebeeinheit 16 die freie Lage 22 durch eine Bewegung in Richtung der Ebene der Lage 22 auf die Lagenstützplatte 26 der Lagenaufnahme 14 verschoben hat, wobei sich die Lage 22 an der Lagenstützplatte 26 anlegt.

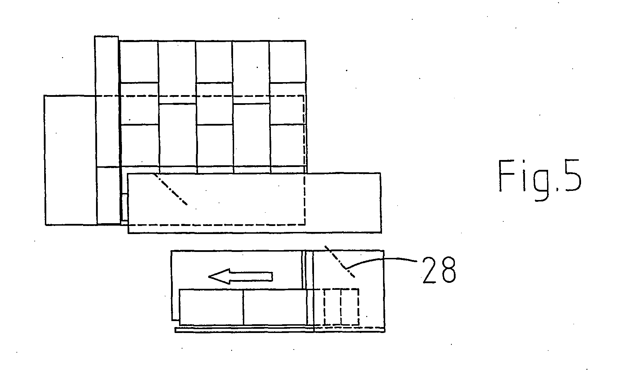

In Fig. 5 ist nun die Position gezeigt, in der die Lagenaufnahme 14 (in dieser Darstellung mit der Schiebeeinheit 16) um eine zweite Achse 28 derart verkippt ist, dass die Lage 22 wieder die horizontale Position einnimmt. In dieser Position wird die Lage 22 abgeführt.

Sodann kann dieser Vorgang wiederholt werden, indem die Stapelstützplatte 30 und die Lagenaufnahme 14 sowie die Schiebeeinheit 16 relativ zu der ortfesten Stapeltragplatte 18 (oder die Stapeltragplatte 18 relativ zu der Stapelstützplatte 30) verschoben wird, das die nunmehr freie Lage in eine mit der Lagetragplatte 24 fluchtet und von der (zuvor wieder zurückgeführten) Schiebeeinheit 16 in die Lagenaufnahme 14 geschoben werden kann.

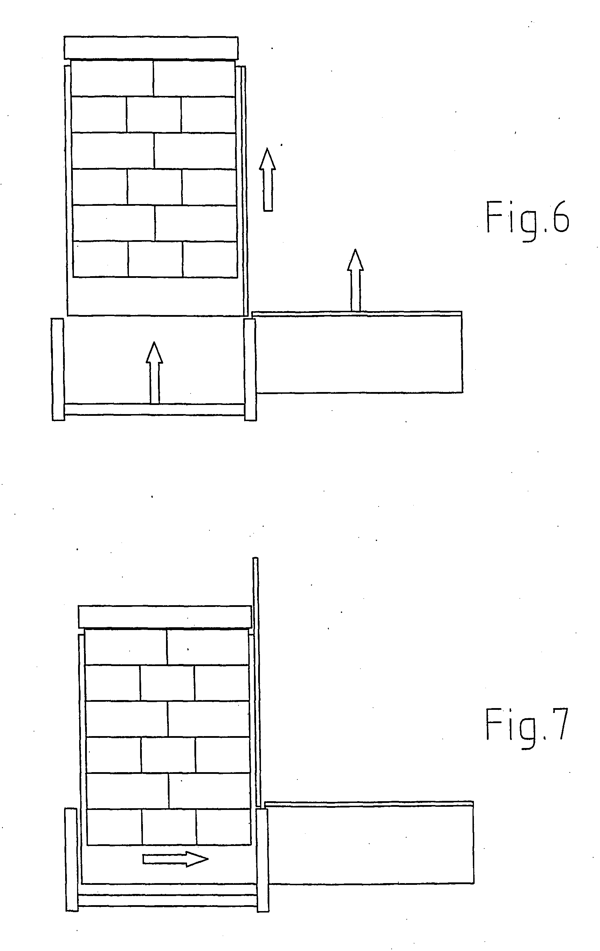

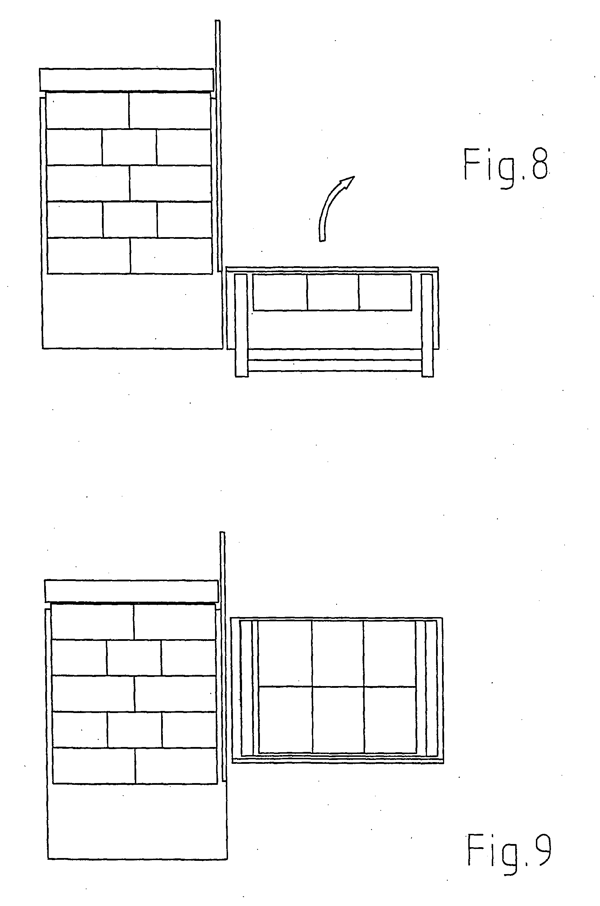

Die Fig. 6 bis 9 zeigen den eben beschriebenen Ablauf in einer Draufsicht leicht schräg von oben gesehen.

Der Depalettierer zeichnet sich also dadurch aus, dass die Stapelaufnahme 12 mit einer sich zu der Stapeltragplatte 18 rechtwinklig erstreckenden Tragestützplatte 30 versehen ist. In der zweiten Position verläuft die Stapeltragplatte 18 in einem geringen Winkel zur Horizontalen, die Stapelstützplatte 30 in einem Winkel von etwas mehr als 90° zur Horizontalen. Der Warenstapel 10 liegt also mit einer Seite auf der Stapeltragplatte 18 auf, eine benachbarte Seite wird von der Stapelstützplatte 30 abgestützt. Die Stapelaufnahme 12 bildet so eine Aufnahme, die zwei aneinander angrenzende Seitenflächen des Warenstapels stützt, ein Abfallen von Waren aus dem Stapel ist verhindert.

Durch eine Relativbewegung zwischen der den Warenstapel tragenden Stapeltragplatte 18 und der Stapelstützplatte 30 (mit der Lagenaufnahme 14 und der Schiebeeinheit 16) kommt die jeweils freie Lage 22 des Warenstapels in eine Position, in der ihre an die neben ihr liegende Lage 22 angrenzende Ebene mit der Lagenstützplatte 26 der Lagenaufnahme 14 fluchtet. Eine Schiebeplatte 32, die an der der Lagenaufnahme abgewandten Seitenfläche der Lage 22 angreift, verschiebt nun die freie Lage auf die Lagentragplatte 24 der Lagenaufnahme, wobei eine Lagenstütze 34, die bei Beginn des Abschiebens in der Ebene der Stapelstützplatte 30 lag, mit verschoben wird und die der Schiebeplatte 32 gegenüberliegende Seitenfläche der abzuschiebenden Lage 22 stützt.

Nachdem die freie Lage 22 von der Lagenaufnahme aufgenommen wird, wird diese - mit oder ohne Schiebeeinheit 16 um eine zweite Achse 28 wieder in die horizontale Position verschwenkt und kann abgeführt werden.

Bei dem hier vorgeschlagenen Depalettierer erfolgt keine Relativbewegung zwischen der Stapeltragplatte 16 und dem Warenstapel, die Relativbewegung zwischen Stapelstützplatte 30 und dem Warenstapel ist unschädlich, da die Kraft zwischen Warenstapel und Stapelstützplatte 30 gering ist. Bei einer bevorzugten Ausführungsform ist die Stapelstützplatte 30 jedoch mit einem antreibbaren umlaufenden Band versehen, so dass eine Reibung zwischen dem Warenstapel und der Stapelstützplatte 30 nicht gegeben ist.

Auch die Lagentragplatte 24 und/oder die Lagenstützplatte 26 können mit einem antreibbaren umlaufenden Band versehen sein, so dass die Lagenstützplatte 26, die bei dem Abkippen der Lagenaufnahme 14 die Grundplatte der abgestapelten Lage 22 bildet, das Abführen der Lage 22 aus der Lagenaufnahme bewirken kann.

## Patentansprüche

1. Depalettierer zum lagenweisen Entstapeln eines von einer Transportpalette (10) getragenen Warenstapels, mit einer Stapelaufnahme (12), einer,Lagenaufnahme (14) und einer Schiebeeinheit (16), wobei
die zur Aufnahme des Warenstapels dienende, mit einer diesen tragenden Stapeltragplatte (18) versehene Stapelaufnahme (12) um eine erste Achse (20) zwischen einer ersten Position, in der die Ebene der Lagen (22) horizontal ausgerichtet sind, und einer zweiten Position, in der die Ebenen der Lagen (22) jedenfalls im wesentlichen vertikal ausgerichtet sind, kippbar ist, und
die zur Aufnahme der jeweiligen freien Lage (22) des Warenstapels dienende Lagenaufnahme (14) mit einer Lagentragplatte (24) und einer sich rechtwinklig zu der Stapeltragplatte (18) erstreckenden Lagenstützplatte (26) versehen ist und zum Kippen um eine zweite Achse (28) in eine Position, in der die aufgenommene Lage (22) wieder horizontal ausgerichtet ist, ausgebildet ist,
**dadurch gekennzeichnet, dass**
die Stapelaufnahme (12) eine sich rechtwinklig zu der Stapeltragplatte (18) erstreckende Stapelstützplatte (30) aufweist, wobei die Stapeltragplatte (18) in der zweiten Position der Stapelaufnahme (12) zur Horizontalen einen Winkel von weniger als 45° einnimmt,
die Lagenstützplatte (26) sich rechtwinklig zu der Stapelstützplatte (30) erstreckt,
die Schiebeeinheit (16) zum Abschieben der jeweiligen freien Lage (22) des Warenstapels von der Stapeltragplatte (18) auf die Lagentragplatte (24) eingerichtet ist, und
die Stapeltragplatte (18) oder die Stapelstützplatte (30) derart relativ zueinander verschieblich ausgebildet sind, dass die jeweilige freie Lage (22) mit der Lagenaufnahmeplatte (24) fluchtend ausgerichtet werden und von der Schiebeinheit (16) von der Stapeltragplatte (18) auf die Lagentragplatte (24) verschoben werden kann.

2. Depalettierer nach Anspruch 1, **dadurch gekennzeichnet, dass** die Stapelstützplatte (30), die Lagenaufnahme (14) und die Schiebeeinheit (16) relativ zu der den zu entstapelnden Warenstapel tragenden Stapeltragplatte (18) in ihren Ebenen verschieblich ausgebildet sind.

3. Depalettierer nach Anspruch 1, **dadurch gekennzeichnet, dass** die den zu entstapelnden Warenstapel tragende Stapeltragplatte (18) relativ zu der Stapelstützplatte (30), der Lagenaufnahme (14) und der Schiebeeinheit (16) in ihrer Ebene verschieblich ausgebildet ist.

4. Depalettierer nach einem der vorangehenden Ansprüche, **dadurch gekennzeichnet, dass** die Schiebeeinheit (16) mit einer auf die der Lagenaufnahme (14) abgewandten Seitenfläche der Lage (22) angreifenden Schiebeplatte (32) und einer sich bei Beginn des Abschiebens in der Ebene der Stapelstützplatte (30) erstreckenden Lagenstütze (34) versehen ist.

5. Depalettierer nach einem der vorangehenden Ansprüche, **dadurch gekennzeichnet, dass** die erste und/oder die zweite Achse (20, 28) zu der Horizontalen geneigt verlaufen.

6. Depalettierer nach einem der vorangehenden Ansprüche, **dadurch gekennzeichnet, dass** die Stapeltragplatte (18) mit Mitteln zum Ergreifen der den Warenstapel tragenden Palette versehen ist.

7. Depalettierer nach einem der vorangehenden Ansprüche, **dadurch gekennzeichnet, dass** die Stapelstützplatte (30) mit einem antreibbaren umlaufenden Band versehen ist.

8. Depalettierer nach einem der vorangehenden Ansprüche, **dadurch gekennzeichnet, dass** die Lagenstützplatte (26) mit einem antreibbaren umlaufenden Band versehen ist.

9. Depalettierer nach einem der vorangehenden Ansprüche, **dadurch gekennzeichnet, dass** die Lagentragplatte (24) mit einem antreibbaren umlaufenden Band versehen ist.

## Claims

1. Depalletizer for layer by layer destacking a goods stack supported by a transport pallet (10), with a stack receiving unit (12), a layer receiving unit (14), and a pushing unit (16),
it being possible for the stack receiving unit (12) that serves to receive the goods stack and is provided with a stack carrying plate (18) to support it, to be tilted about a first axis (20) between a first position in which the levels of the layers (22) are aligned horizontally, and a second position in which the levels of the layer (22) are in any case aligned essentially vertically, and
the layer receiving unit (14) that serves to receive the respectively free layer (22) of the goods stack being provided with a layer carrying plate (24) and a layer supporting plate (26) extending at right angles to the stack carrying plate (18) and being designed for tilting about a second axis (28) into a position in which the received layer (22) is again aligned horizontally,
**characterized in that**
the stack receiving unit (12) has a stack supporting plate (30) that extends at right angles to the stack carrying plate (18), the stack carrying plate (18) assuming an angle of less than 45° relative to the horizontal direction in the second position of the stack receiving unit (12),
the layer supporting plate (26) extending at right angles to the stack supporting plate (30),
the pushing unit (16) being designed for pushing the respective free layer (22) of the goods stack off the stack carrying plate (18) onto the layer carrying plate (24), and
the stack carrying plate (18) or the stack supporting plate (30) being designed so as to be shiftable relative to each other such that the respective free layer (22) can be aligned flush with the layer receiving plate (24) and can be shifted by the pushing unit (16) from the stack carrying plate (18) onto the layer carrying plate (24).

2. Depalletizer according to claim 1, **characterized in that** the stack supporting plate (30), the layer receiving unit (14), and the pushing unit (16) are designed so that they can be shifted on their levels relative to the stack carrying plate (18) that carries the goods stack to be destacked.

3. Depalletizer according to claim 1, **characterized in that** the stack carrying plate (18) that carries the goods stack to be destacked is designed such that it can be shifted on its level relative to the stack supporting plate (30), the layer receiving unit (14), and the pushing unit (16).

4. Depalletizer according to one of the preceding claims, **characterized in that** the pushing unit (16) is provided with a pushing plate (32) that engages the side face of the layer (22) facing away from the layer receiving unit (14) and a layer support (34) that extends on the level of the stack supporting plate (30) at the start of the pushing off process.

5. Depalletizer according to one of the preceding claims, **characterized in that** the first and/or the second axis (20, 28) run inclined relative to the horizontal direction.

6. Depalletizer according to one of the preceding claims, **characterized in that** the stack carrying plate (18) is provided with means for gripping the pallet that carries the goods stack.

7. Depalletizer according to one of the preceding claims, **characterized in that** the stack supporting plate (30) is provided with a circulating belt that can be driven.

8. Depalletizer according to one of the preceding claims, **characterized in that** the layer supporting plate (26) is provided with a circulating belt that can be driven.

9. Depalletizer according to one of the preceding claims, **characterized in that** the layer carrying plate (24) is provided with a circulating belt that can be driven.

## Revendications

1. Déchargeuse de palettes pour désempiler couche par couche une pile de marchandises portée par une palette de transport (10), avec un logement de pile (12), un logement de couche (14) et une unité de poussée (16), sachant
que le logement de pile (12), servant à recevoir la pile de marchandises et doté d'une plaque (18) de support de pile portant cette pile de marchandises, peut être basculé autour d'un premier axe (20) entre une première position, dans laquelle les plans des couches (22) sont orientés horizontalement, et une deuxième position dans laquelle les plans des couches (22) sont pour le moins orientés essentiellement verticalement,
et que le logement de couche (14), servant à recevoir la couche libre respective (22) de la pile de marchandises, est doté d'une plaque (24) de support de couche et d'une plaque (26) d'appui de couche s'étendant perpendiculairement à la plaque (18) de support de pile, et est conçu pour basculer autour d'un deuxième axe (28) dans une position dans laquelle la couche reçue (22) est ramenée à l'horizontale,
**caractérisée en ce que**
le logement de pile (12) présente une plaque (30) d'appui de pile s'étend perpendiculairement à la plaque (18) de support de pile, sachant que, dans la deuxième position du logement de pile (12), la plaque (18) de support de pile forme avec l'horizontale un angle inférieur à 45°,
la plaque (26) d'appui de couche s'étend perpendiculairement à la plaque (30) d'appui de pile,
l'unité de poussée (16) est conçue pour expulser la couche libre respective (22) de la pile de marchandises de la plaque (18) de support de pile sur la plaque (24) de support de couche,
et la plaque (18) de support de pile ou la plaque (30) d'appui de pile sont conçues coulissantes l'une par rapport à l'autre de telle sorte que la couche libre respective (22) peut être orientée en alignement avec la plaque (24) de support de couche et peut être déplacée par l'unité de poussée (16) de la plaque (18) de support de pile sur la plaque (24) de support de couche.

2. Déchargeuse de palettes selon la revendication 1, **caractérisée en ce que** la plaque (30) d'appui de pile, le logement de couche (14) et l'unité de poussée (16) sont conçus coulissants dans leur plans par rapport à la plaque (18) de support de pile portant la pile de marchandises à désempiler.

3. Déchargeuse de palettes selon la revendication 1, **caractérisée en ce que** la plaque (18) de support de pile portant la pile de marchandises à désempiler est conçue coulissante dans son plan par rapport à la plaque (30) d'appui de pile, au logement de couche (14) et à l'unité de poussée (16).

4. Déchargeuse de palettes selon l'une des revendications précédentes, **caractérisée en ce que** l'unité de poussée (16) est pourvu d'une plaque de poussée (32) agissant sur la face latérale de la couche (22) qui est éloignée du logement de couche (14), et d'un appui de couche (34) s'étendant dans le plan de la plaque (30) d'appui de pile au début de l'expulsion.

5. Déchargeuse de palettes selon l'une des revendications précédentes, **caractérisée en ce que** le premier et/ou le deuxième axes (20, 28) s'étendent en inclinaison par rapport à l'horizontale.

6. Déchargeuse de palettes selon l'une des revendications précédentes, **caractérisée en ce que** la plaque (18) de support de pile est pourvue de moyens pour saisir la palette portant la pile de marchandises.

7. Déchargeuse de palettes selon l'une des revendications précédentes, **caractérisée en ce que** la plaque (30) d'appui de pile est pourvue d'une bande circulante pouvant être entraînée.

8. Déchargeuse de palettes selon l'une des revendications précédentes, **caractérisée en ce que** la plaque (26) d'appui de couche est pourvue d'une bande circulante pouvant être entraînée.

9. Déchargeuse de palettes selon l'une des revendications précédentes, **caractérisée en ce que** la plaque (24) de support de couche est pourvue d'une bande circulante pouvant être entraînée.
